# EUROPEAN PATENT SPECIFICATION

(11) **EP 2 859 256 B1**
(45) Date of publication and mention of the grant of the patent: **07.12.2016**
(21) Application number: 13747503.4
(22) Date of filing: 12.06.2013
(51) Int. Cl.: F16J 9/06, F16J 9/20, F16J 9/22

(54) **PISTON FOR A FLUIDIC ACTUATOR**
KOLBEN FÜR EINEN FLUIDISCHEN AKTUATOR
PISTON POUR ACTIONNEUR À FLUIDE

(30) Priority: 12.06.2012 IT TO20120508
(43) Date of publication of application: 15.04.2015
(73) Proprietor: Vallacqua, Giulio, Aosta (IT)
(72) Inventor: Vallacqua, Giulio, Aosta (IT)
(74) Representative: D'Angelo, Fabio
(86) International application number: PCT/IB2013/054820
(87) International publication number: WO 2013/186724

(56) References cited:
- WO-A1-2011/085754
- GB-A- 901 750
- JP-A- 2000 045 862
- US-A- 2 958 564
- US-A- 3 556 475
- US-A- 5 833 518

## Description

### TECHNICAL FIELD

The present invention relates to a piston for a fluidic actuator.

### BACKGROUND ART

As known, in alternative volumetric machines (endothermic motors, volumetric pumps and compressors), a piston, having a generally cylindrical body, is moved along its own axis inside an associated hollow cylinder. Said movement may derive from expansion of an operating fluid or may determine compression of the operating fluid.

In particular, in the case of endothermic motors, movement of the piston derives from a combustion reaction with expansion of the operating fluid (gas) inside a chamber (the combustion chamber) comprised between the cylinder and the piston head.

In the case of alternating volumetric compressors or pumps, on the other hand, the operating fluid, for example air or oil, is compressed in a chamber (the compression chamber) between the cylinder and the piston head as a result of an axial movement forced on said piston.

In order to ensure correct functioning of the actuators described, the sliding surfaces of the piston and cylinder must be appropriately lubricated with a lubricant fluid, such as oil.

It is therefore necessary to avoid the operating fluid (for example the combustion gases or the compressed fluid) exiting from the spaces assigned to it and, simultaneously, it is necessary to limit the quantity of lubricant fluid which passes into the zone where the operating fluid is present.

In order to achieve these objectives, the known pistons are provided with peripheral annular grooves, inside which sealing elements are housed which are also substantially annular, adapted to exert a fluidic sealing action.

If the seal is obtained on the operating fluid, said sealing elements are commonly called "sealing rings" or "elastic strips"; if the function realised is limiting passage of the lubricant fluid into the operating fluid zone, the term used is "scraper rings".

An example of a known piston for an endothermic motor is denoted in its entirety with the number 1 in figures, 1, 3, 4 and 5 and includes a generally cylindrical body 2 of axis A and a plurality of substantially annular sealing elements 3, housed in respective peripheral annular grooves 4 of the body 2.

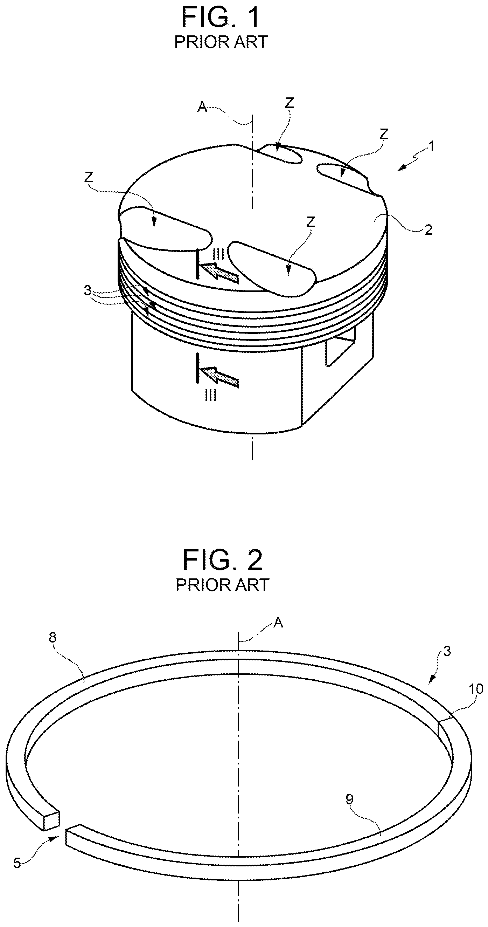

One of the sealing elements 3 of the known type is shown in detail in figure 2; said sealing element is flat and is provided with a transverse through notch 5, in order to be expanded on assembly inside the relative groove 4.

The sealing elements 3 of the known type typically have a greater outer diameter than the inner diameter of the wall 6 of the cylinder 7 on which they are destined to slide.

Therefore, when piston 1 is introduced into cylinder 7, the sealing elements 3 narrow and exert an elastic radial force on the wall 6 of said cylinder 7; their shape is designed so that distribution of said force is as uniform as possible around the contour.

In sealing rings, the radial force is the pre-load necessary to maintain them pressed against wall 6 of cylinder 7, whatever the pressure value, even if negative, of the operating fluid acting in said cylinder 7.

In scraper rings, the pressure against wall 6 of cylinder 7 may be increased, to break the coat of lubricant adhering to said wall 6, by inner expanding springs, which may have various shapes: flexure springs, annular spiral springs, etc.

In general, the sealing elements 3 currently in use may be viewed as formed of two semi-rings 8 and 9 (figure 2), restrained projecting into the intermediate section 10, diametrically opposed to the notch 5, and inflected by the reactive forces of the wall 6 of the cylinder 7.

Since the semi-rings 8 and 9 must resist the relative bending moments, the radial dimension and the moment of inertia of their transverse sections cannot be reduced below certain limits, thus rendering the sealing elements 3 relatively rigid on their plane.

This rigidity may prejudice continuity of contact of a sealing element 3 with the cylinder 7, when this is oval-shaped or, in any case, when it is deformed; in this case, so to speak, the sealing element 3 does not perfectly copy the wall 6 of the cylinder 7 and the seal is reduced.

Further blow-bys of operating fluid or lubricant also occur through the axial and radial clearances, which must be maintained fairly wide between the sealing elements 3 and the relative grooves 4, in order to ensure said sealing elements 3 have the necessary freedom of movement.

In order to avoid these blow-bys, it has also been proposed to insert the pushing elements or the counter-rings into the rear space between each sealing element 3 and the generally cylindrical bottom surface 11 of the relative groove 4.

The radial forces, which said pushing elements potentially exert, either towards the outside or also towards the inside of the piston 1, are still obtained by deflection on their plane of two semi-rings, such as semi-rings 8 and 9 of sealing elements 3 of figure 2.

The elastic pre-load of the sealing elements 3 against the wall 6 of the cylinder 7 must be maintained within the lowest possible values, in order to reduce losses of friction, and it usually is not sufficient to maintain the seal at the operating fluid pressure, i.e. to prevent it infiltrating between wall 6 and sealing element 3.

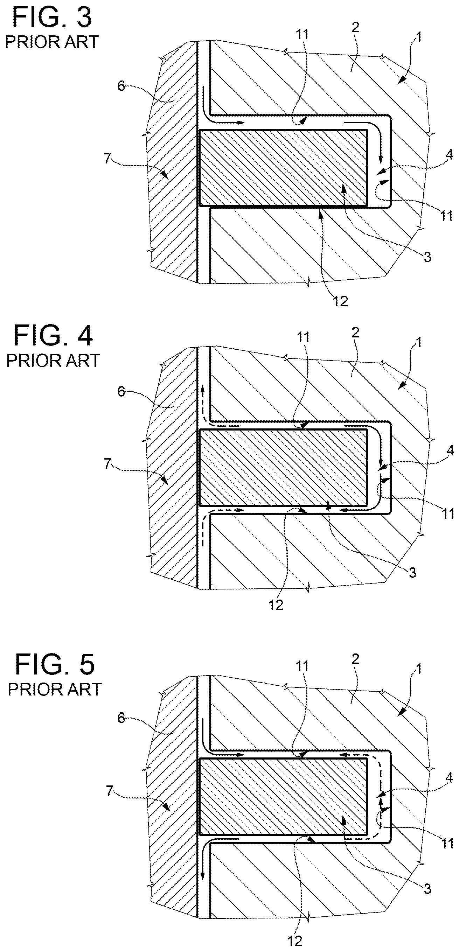

It is known that the seal along the perimeter of the sealing element 3 is produced by said operating fluid pressure, which, as indicated by the continuous arrow of figure 3 (if the cylinder 7 has vertical axis A and the operating fluid is above the piston), is inserted above and behind the sealing element 3 in the space between the radially innermost edge of the latter and the bottom surface 11 of the relative groove 4.

The pressure of the operating fluid thus strongly pushes the sealing element 3 to seal against the lower flank 12 of the groove 4 and against the wall 6 of the cylinder 7, which react with sufficient reaction forces.

However, this seal is not maintained in all operating phases of alternating machines.

For example, in four-stroke endothermic motors, each sealing element 3 remains pressed against the lower flank 12 of the relative groove 4 for around only half of the cycle, in the compression, combustion and expansion phases between the two bottom dead centres.

At the end of the exhaust phase, around the subsequent upper dead centre, the inertia and decompression of the combusted gases raise each sealing element 3 towards the upper flank 13 of the relative groove 4 (figure 4).

At this point, several particles of the lubricant fluid (broken arrow) may be sucked into the clearances between the sealing elements 3 and the relative grooves 4 and may mix with the operating fluid, while other particles of lubricant fluid, sucked into a preceding cycle, may be pushed above the sealing elements 3 towards the combustion chamber.

Similarly, around the subsequent bottom dead centre, at the end of suction and at the start of compression, the sealing elements 3 again position themselves against the lower flanks 12 of the relative grooves 4.

Thus, the particles of lubricant fluid may be pushed to mix with the operating fluid in the clearances between the sealing elements 3 and the relative grooves 4, while other fractions of operating fluid introduced under the sealing elements 3 in the previous exhaust end phase may be pushed downwards into the sump, producing blow-by (figure 5).

Similar considerations could be made for two-stroke engines and alternating compressors and pumps.

The sealing elements 3 currently in use therefore cannot prevent the blow-by of fluids described above, which is spread along the entire edge of the grooves 4 in the clearances around said sealing elements 3.

As said, it is essential to maintain said clearances, both to avoid sticking and encrustations and also to ensure the pressurized operating fluid enters into the so-called rear chamber between the sealing elements 3 and the relative grooves 4 and presses on said sealing elements 3 to obtain the seal, as shown in figure 3.

Further significant blow-bys occur through the notches 5 of the sealing elements 3, the end edges of which must never touch each other, in any operating condition, as a result of elastic and thermal deformation.

Therefore, these concentrated blow-bys, which in order of magnitude are comparable to the blow-bys spread around the edge, also cannot be eliminated in the sealing elements 3 currently in use.

JP2000045862 discloses a piston for a fluidic actuator as defined in the preamble of claim 1.

### DISCLOSURE OF INVENTION

The object of this invention is therefore providing a piston for a fluidic actuator which solves these problems connected with pistons of the known type and, in particular, is able to limit the blow-bys described above.

Said object is achieved by the present invention, which relates to a piston for a fluidic actuator, as defined in claim 1.

### BRIEF DESCRIPTION OF THE DRAWINGS

For a better understanding of the present invention, two preferred and non-limiting embodiments are described below, with reference to the appended drawings, wherein:
- Figure 1 is a perspective view, with parts removed for clarity, of a piston realised according to the prior art;
- Figure 2 is a perspective view of a sealing element of the piston of figure 1;
- Figures 3 to 5 are enlarged cross-sections according to line III-III of figure 1, showing the known piston in different operating conditions inside the relative cylinder;
- Figure 6 is a similar cross-section to the one of figures 3 to 5, showing a piston according to the present invention in the assembly phase;
- Figures 7 to 10 are similar cross-sections to the one of figure 6, showing the piston according to the invention in different operating conditions inside the relative cylinder;
- Figure 11 shows an enlarged perspective view of a sealing element carried by the piston of figures 6 to 10;
- Figure 12 shows, in an enlarged perspective view of a pushing element carried by the piston of figures 6 to 10;
- Figure 13 is a cross-section similar to the ones of figures 7 to 10, showing a possible variant of the sealing element carried by the piston according to the present invention;
- Figure 14 is a perspective view, with parts removed for clarity, of a different embodiment of a piston that does not form part of the present invention;
- Figure 15 is a reduced-scale, perspective view of a sealing element of the piston of figure 14;
- Figure 16 is an exploded perspective view of repetitive base portions of a groove, a sealing element and a pushing element of the piston of figures 14 and 15;
- Figures 17a, 18a, 19a and 20a are enlarged cross-sections according to line XVIIa-XVIIa of figure 14, showing the piston of figures 14 and 15 in different operating conditions inside the relative cylinder;
- Figures 17b, 18b, 19b and 20b are enlarged cross-sections according to line XVIIb-XVIIb of figure 14, showing the piston of figures 14 and 15 in different operating conditions inside the relative cylinder; and
- Figures 17c, 18c, 19c and 20c are enlarged cross-sections according to line XVIIc-XVIIc of figure 14, showing the piston of figures 14 and 15 in different operating conditions inside the relative cylinder.

### BEST MODE FOR CARRYING OUT THE INVENTION

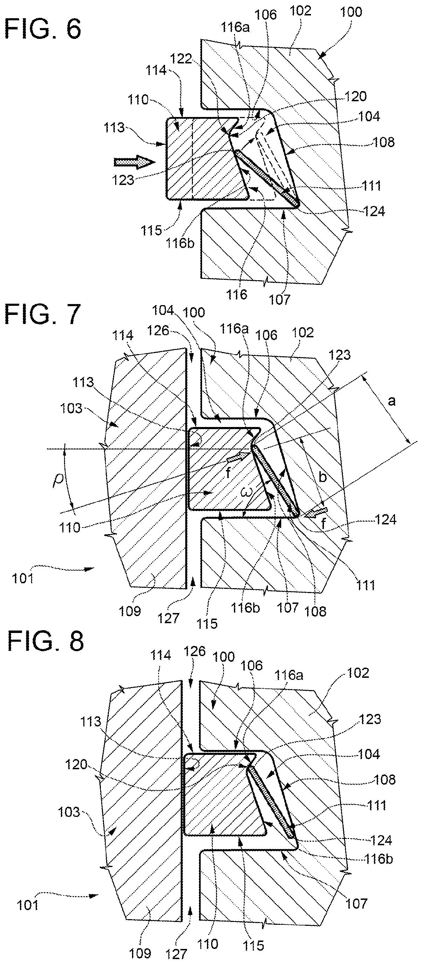

With reference to figures 6 to 10, the number 100 denotes, in its entirety, a piston according to the dictates of the present invention for a fluidic actuator 101 (figures 7 to 10) of axis A, of the type controlled by expansion of an operating fluid, such as in the case of endothermic motors, or acting on an operating fluid to compress it, such as volumetric pumps or compressors.

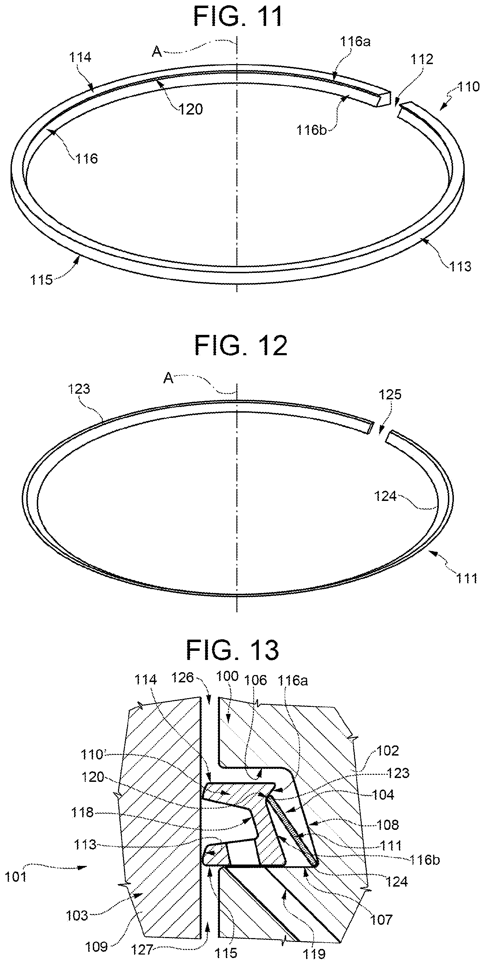

The piston 100 essentially comprises:
- a generally cylindrical body 102 of axis A, realised in a single piece and adapted to slide coaxially in an associated hollow cylinder 103 of the actuator 101;
- a plurality of groves 104 (only one visible in figures 6 to 10) peripherally obtained on the body 102, extending around axis A in positions equally axially spaced from each other and each delimited by two flanks 106, 107, respectively upper and lower, orthogonal to axis A, and by a bottom surface 108 connecting to one another the radially innermost edges of flanks 106 and 107;
- a plurality of sealing elements 110 (only one visible in figures 6 to 11) extending around axis A, housed in the respective grooves 104 and adapted to exert, on use, a fluidic sealing action against the wall 109 of the associated cylinder 103; and
- a plurality of pushing elements 111 (only one visible in figures 6 to 10 and in figure 12) extending around axis A, housed in the respective grooves 104 between the body 102 and the relative sealing elements 110 and exerting an elastic pushing action on said sealing elements 110 towards the outside of the body 102.

In particular, each groove 104 has an annular conformation of axis A and is adapted to house the relative sealing element 110 and the relative pushing element 111, with axial clearance along axis A.

Preferably, the bottom surface 108 of each groove 104 has a frusto-conical conformation of axis A with a diameter increasing towards the part of the actuator 101 in which the operating fluid acts, in the case shown towards upper flank 106.

Each sealing element 110 (figures 6 to 11) has a flat configuration, i.e. extends in use orthogonally to axis A, and has a transverse through notch 112; each sealing element 110 thus has an open or C-shaped annular conformation with close free ends.

In greater detail, each sealing element 110 is delimited by a substantially cylindrical front surface 113 of axis A, adapted to cooperate in use with wall 109 of cylinder 103, from opposite and substantially flat end surfaces 114, 115, respectively upper and lower, which extend orthogonally to axis A, and a rear surface 116, opposite the front surface 113, turned towards the bottom surface 108 of the relative groove 104 and having an open annular conformation.

The rear surface 116 of each sealing element 110 advantageously has a recess 120, which defines a sliding seat for the relative pushing element 111 and is delimited by two surface portions 116a, 116b, forming between each other an angle of more than 90° and less than 180°.

In practice, the two surface portions 116a, 116b of the rear surface 116 of each sealing element 110 have frusto-conical conformations converging towards an intersection zone 122, representing the section of minimum radial thickness of said sealing element 110.

The angle between the two surface portions 116a and 116b of each sealing element 110 is preferably comprised between 100° and 180°, for example between 115° and 130°, and 123° - 124° in the case shown.

In the case shown, with reference to each sealing element 110, the surface portion 116a is adjacent to the upper end surface 114, while the surface portion 116b is adjacent to the lower end surface 115.

Preferably, the intersection zone 112 between the surface portions 116a and 116b of each sealing element 110 is closer to the upper end surface 114 than to the lower end surface 115.

According to a preferred embodiment of the present invention, the surface portion 116b of each sealing element 110 is parallel to the bottom surface 108 of the relative groove 104.

In general, the surface portions 116a and 116b of the recess 120 of each sealing element 110 have geometrical dimensions such as always to cover the relative pushing element 111 and prevent disengagement from said recess 120.

With reference to figures 6-10 and 12, each pushing element 111 has a frusto-conical configuration and is inserted coaxially into the relative groove 104 so as to cooperate with the recess 120 of the relative sealing element 110 at its own axial end 123 with the largest diameter, and with the lower flank 107 of said groove 104, at its own axial end 124 with the smallest diameter.

More precisely, each pushing element 111 extends in a radially interposed position between the bottom surface 108 of the relative groove 104 and the relative sealing element 110.

In greater detail, each pushing element 111 is entirely positioned radially interposed between the rear surface 116 of the relative sealing element 110 and the bottom surface 108 of the relative groove 104.

Each pushing element 111 has, similarly to the sealing element 110, a transverse through recess 125 which allows expansion on assembly inside the relative groove 104.

Preferably, each pushing element 111 is inserted inside the relative groove 104 with the axial end 123 with the greatest diameter turned towards the part of the actuator 101 in which the operating fluid acts, towards the upper flank 106 in the case shown.

The pushing elements 111 are obtained from extremely thin straps, typically steel for springs, with an extremely elongated transverse section.

When, as suggested in figure 6, on assembly of the piston 100 in the cylinder 103, each sealing element 110, arranged radially more externally with respect to axis A, enters into the relative groove 104, the cross-sections of the relative pushing element 111 are rotated and pushed to the bottom of said groove 104 (broken line) and react elastically to the movement.

In fact, each pushing element 111 is subject, in use, around the contour, to distributed stress torques f, indicated in figure 7, as reactions of the relative sealing element 110 and the relative groove 104, and therefore acts as a ring iron subject to unit moments m = f b = f a sin (ω+p), uniformly distributed and acting on the radial through planes for the central axis of the iron circle.

It is known in construction science that rotations of cross-sections of said iron are proportionate to the moments m applied to the contour, that said cross-sections are stressed by constant bending moments and that the torque is constantly zero, due to the geometrical and load symmetry.

Each pushing element 111 may therefore easily supply a uniform radial thrust fcosp towards the relative sealing element 110 and therefore towards the wall 109 of the cylinder 103.

This thrust is generated locally, section by section, and does not cause bending of the relative sealing element 110; in addition, it could even be imagined as similar to a beam on an elastic terrain in uniform lowering.

Therefore, each sealing element 110 may be constructed with transverse sections much lower than those of the known sealing elements 3, which, on the contrary, must be able to resist deflection of two semi-rings 8 and 9 already shown in figure 2.

The much lower rigidity allows each sealing element 110 to adapt to the deformations of the cylinder 103 and better to copy the wall 109, with the same thrust exerted against it.

The solution according to the present invention also prevents, through clearance around the contour of each groove 104, distributed blow-bys, which are present in the sealing elements 3 of the known type and have already been exemplified in figures 3 to 5; the pushing elements 111 constitute an efficient seal against said blow-bys.

In fact, figure 7 demonstrates that the predominantly radial reactive pre-loads f, produced by tightening of each pushing element 111 in the relative groove 104, make the pushing element 111 adhere permanently to the bottom of the groove 104 and the rear surface 116 of the relative sealing element 110.

These contacts are continuous and are never absent in any functioning condition, even though they leave each sealing element 110 free to move in any case within the opportune axial and radial clearances.

Therefore, in the solution according to the invention, every possible communication inside each groove 104 between the upper passage 126, arranged on the operating fluid side, and the lower passage 127, arranged on the lubricant fluid side, is closed by the relative pushing element 111, even when the corresponding sealing element 110 is detached from both flanks 106, 107, of said groove 104, as in figure 7, or when said sealing and pushing elements 110, 111 are pushed together by the action of inertia against the upper flank 106 of the groove 104, as shown in figure 8, in the absence of significant pressure of the operating fluid.

This occurs, for example, in four-stroke engines, around the upper dead centre of the end of exhaust and the start of suction.

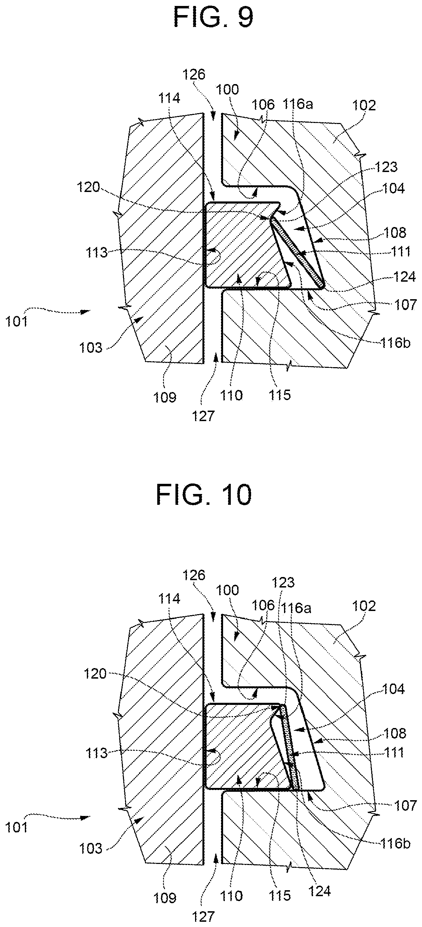

Figure 9 shows the opposite situation, in which the inertia forces act on each pushing element 111 and on the relative sealing element 110 to move them against the lower flank 107 of the relative groove 104.

This also occurs, for example, in four-stroke engines, around the two bottom dead centres of the cycle, at the end of suction and the beginning of exhaust.

Once again in these phases, each pushing element 111 is capable of separating the passages 126 and 127 of the relative groove 104 and preventing perimeter blow-bys.

When, as in figure 10, in the compression, combustion and expansion phases, the heavy pressure of the gases in each passage 126 pushes the relative sealing 110 and pushing 111 elements against the lower flank 107 of the relative groove 104 and against the wall 109 of the cylinder 103, the perimeter seal is established with the same methods shown in figure 3 for the sealing elements 3 of the known type.

However, comparing figures 9 and 10, it is observed that, near the bottom dead centre of the cycle, at the start of compression, the axial end 124 of each pushing element 111, when the pressure of the gases increases, leaves the contact with the bottom surface 108 of the relative groove 104 and is pushed against the relative sealing element 110 to touch it at the edge between the surface portion 116b and the lower end surface 115; during this movement, the contact with lower flank 107 of the groove 104 remains continuous.

In contrast, at the start of exhaust, near the second lower dead centre of a four-stroke cycle, after the pressure of the gases falls, said lower axial end 124 of each pushing element 111 returns elastically from the contacts shown in figure 10 to the contacts shown in figure 9.
The variant of figure 13 refers to a sealing element 110' used for lubricant fluids, also indicated as a scraper ring. Said sealing element 110' will be described below solely insofar as it differs from the sealing elements 110, indicating with the same reference numbers parts which are equal or equivalent to parts already described.

In particular, the sealing element 110' differs from the sealing element 110 essentially in presenting an annular cavity 118 open towards the wall 109 of the cylinder 103 and communicating with a channel 119 of the body 102 of the piston 100 for evacuation of the lubricant fluid towards the zone of provenance.

As illustrated in figure 13, the presence on the sealing element 110' of the recess 120 and cooperation of the latter with the frusto-conical pushing element 111 also prevents in this case secondary blow-bys between the passages 126 and 127; in this case, the differences in pressure are much lower than in the sealing elements 110 used for operating fluids.

It is worth observing that the sealing element 110, for which no particular flexural strength is required, may be constructed not only with a reduced cross-section, but also with different materials to those currently in use (typically cast iron).

In choice of these materials, different properties may advantageously be preferred, such as low friction, resistance to wear and tear, thermal conductivity, etc.

However, the solutions proposed cannot prevent concentrated blow-bys into the notches 112 and 125, still present in the sealing elements 110 and in the pushing elements 111, but may only reduce them.

In fact, since the total radial dimension of the two coupled sealing and pushing elements 110, 111, is much lower than for the known solutions, due to local generation of the pre-load, and since the notches 112 and 125 may be arranged in angularly staggered positions with each other around axis A, their total passage may be more restricted and divided and therefore less permeable.

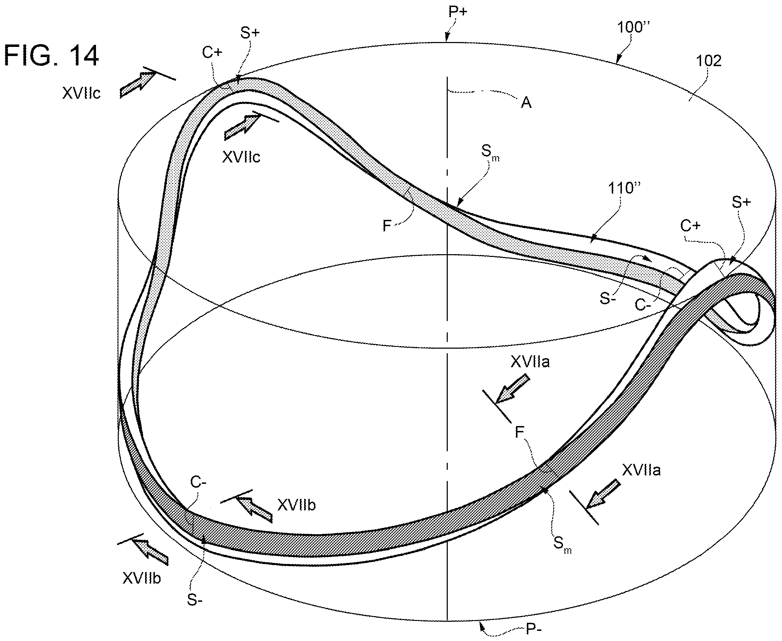

In order also to eliminate completely the blow-bys at the notches 112, 125, another embodiment is proposed of a piston (figures 14-15 and 17a-20c) according to the dictates of the present invention, which will be denoted in its entirety with the number 100".

Said piston 100" will be described below solely insofar as it differs from the piston 100, indicating with the same reference numbers parts which are equal or equivalent to parts already described.

In particular, in this case, piston 100" differs from piston 100 essentially in the fact of comprising sealing elements 110", pushing elements 111" and grooves 104" having double wave or saddle configurations.

More precisely, each double wave configuration having:
- two first portions S- diametrically opposite to each other with respect to said axis A and defining respective lower ridges C- placed in contact with a first axial plane P-orthogonal to the axis A itself;
- two second portions S+ diametrically opposite to one another with respect to said axis A, angularly spaced at 90° from said first portions S- about the axis A itself and defining respective upper ridges C+ placed in contact with a second axial plane P+ parallel to, and spaced by an amount other than zero from, said first axial plane P-; and
- a swinging curvilinear pattern between said upper and lower ridges C + and C- in the portions (Sm) comprised between portions S- and S+.

In other words, the sealing elements 110", the pushing elements 111" and the groves 104" have a substantial sinusoidal development, periodically swinging between a lower ridge C-, an inflexion point F and an upper ridge C+.

Advantageously, in this case, the sealing elements 110" and the pushing elements 111" have continuous extensions around axis A, without recesses or interruptions.

Introducing a pushing element 111" between each sealing element 110" and the relative groove 104", the seal may be achieved with a method entirely similar to the ones seen previously in relation to piston 100.

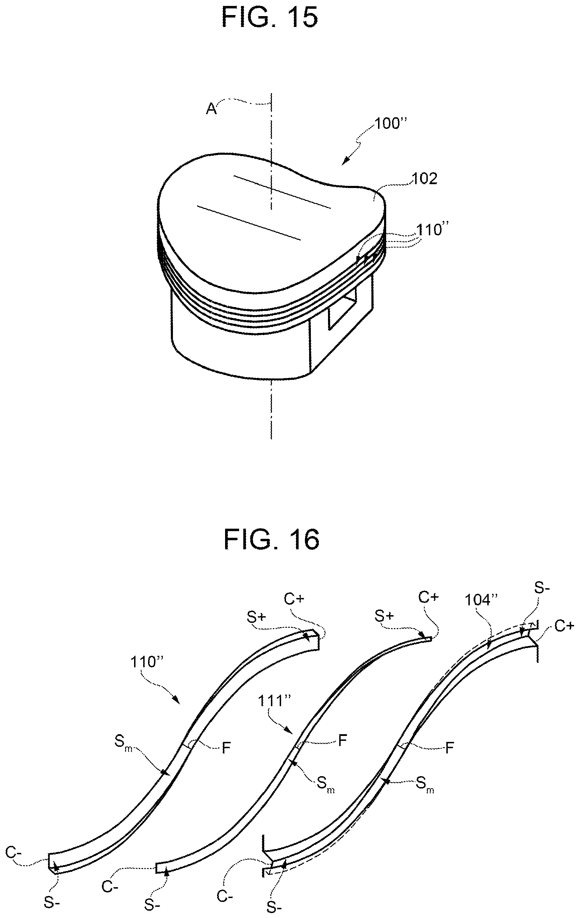

As exemplified in figure 16 (where the semi-wave indicated with C- - F - C+, which is repeated in each ring, twice in an identical position and twice in a symmetrical position, is considered as representative of an entire double wave configuration), the transverse sections of the grooves 104" may be maintained parallel to the radius of the cylindrical body 102 only at the inflexion points F.

In fact, since there are no notches, the sealing elements 110" and the pushing elements 111" must maintain their length unaltered when they move transversally inside the relative grooves 104", particularly when they enter them on assembly.

Therefore, each groove 104" must have the same length as the sealing elements 110" and the pushing elements 111" along a hypothetical external double-wave curve of reference in contact with wall 109 of cylinder 103 and along each parallel line inside.

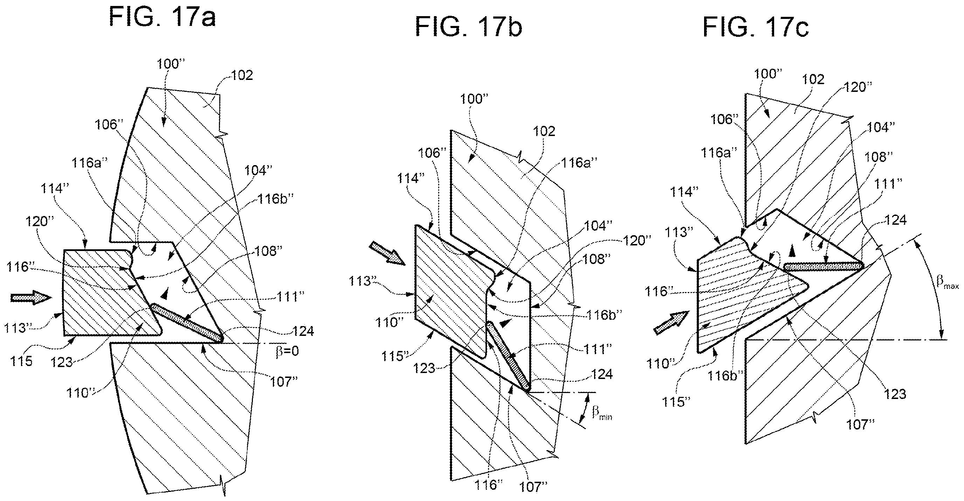

Indicating with β (figures 17a, 17b and 17c) the transversal inclination of each groove 104" on the radius of the cylindrical body 102, this angle must then vary from zero in the inflexion points F to positive and negative values respectively in the arches of ridges C+ e C-, with development such as to obtain constancy of the length in the groove 104"; thus compensating, on proceeding towards the inside of the groove 104", a decrease in the radii with expansion of the waves around the lower and upper ridges C-, C+.

In order to ensure that, along the entire length of a sealing element 110", shaped as a double wave, the contact with the wall 109 of the cylinder 103 is continuous, each transverse section of said sealing element 110", which is perpendicular to its sealing edge on the cylinder 103, must lie on an orthogonal plane to the double-wave curve of reference previously cited; this condition is satisfied if a radius of the cylindrical body 102 lies in each plane of the transverse sections of the sealing element 110".

Evidently, each pushing element 111" must follow development of the angle β of the relative groove 104" and the relative sealing element 110".

This leads to the grooves 104", the sealing elements 110" and the pushing elements 111" all having twisted shapes.

In this case as well, each groove 104" is delimited by two flanks 106", 107", respectively higher and lower, which are transversal to axis A, and by a bottom surface 108", connecting to one another the radially innermost edges of the relative flanks 106", 107".

Preferably, each sealing element 110" has, from the side turned towards the bottom surface 108" of the relative groove 104", a recess 120", which defines a sliding seat for said pushing element 111" and is delimited by two surface portions 116a", 116b", forming between each other an angle of more than 90° and less than 180°.

In order to obtain assembly on the piston 100" of each sealing element 110" and each pushing element 111", said elements are expanded by pulling out the opposing waves, thus to be fitted onto the body 102 of the piston 100" and then left free to return elastically to their initial configuration once inserted into the relative groove 104".

In figures 17a, 17b and 17c, it is shown how, in this step, the return of each sealing element 110" into the relative groove 104" deforms the relative pushing element 111" and produces its elastic reaction, as in the solution shown in figure 6.

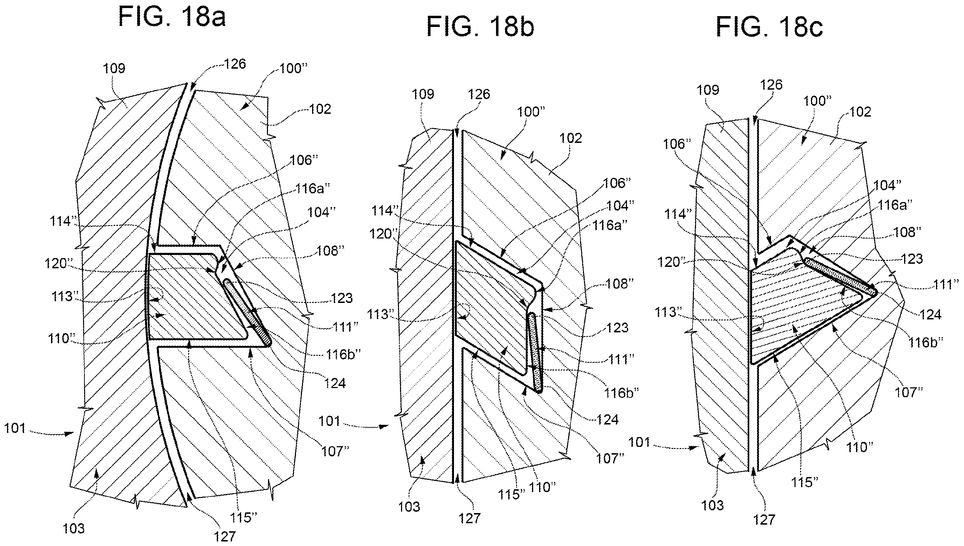

Figures 18a-c indicate, similarly to figure 7, how each pushing element 111", pressing against both the relative groove 104" and the relative sealing element 110", also realises the rear seal even when said sealing element 110" does not touch flanks 106", 107" of the groove 104".

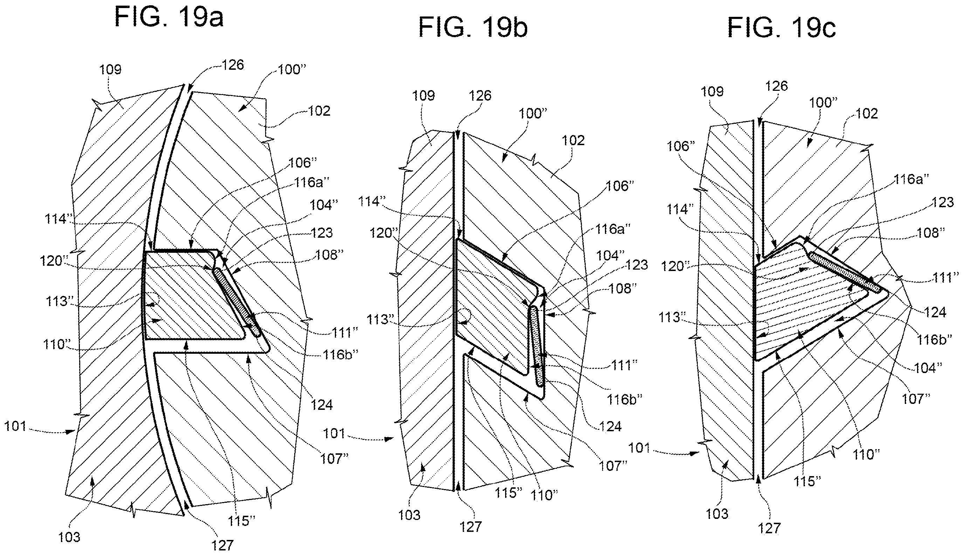

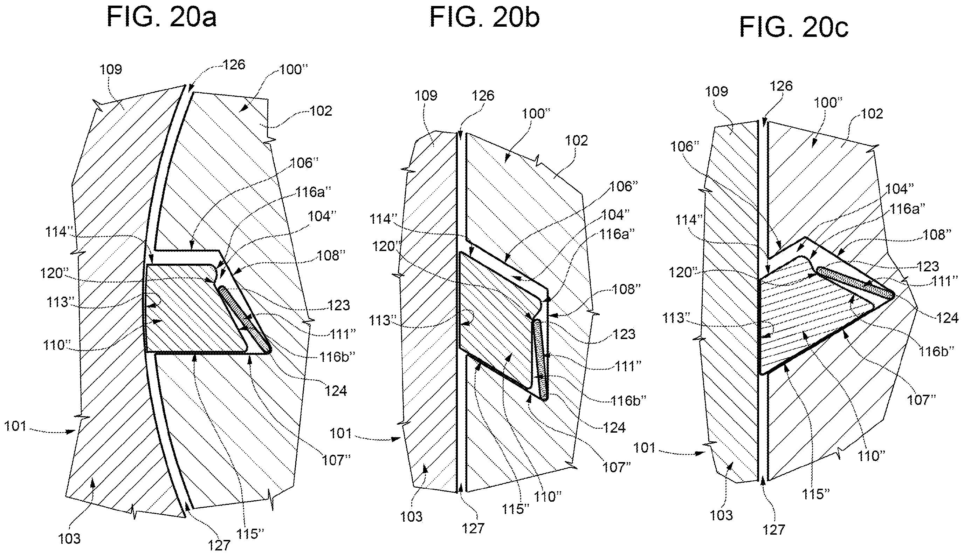

For figures 19a-c and 20a-c, identical considerations as those made with respect to figures 8-10 may be repeated.

The advantages which may be obtained are evident from examination of the characteristics of the pistons 100, 100" realised according to the present invention.

In particular, in all the solutions described and shown, the pushing elements 111, 111":
- are maintained constantly in contact both with the relative sealing elements 110, 110" and with the bottom surfaces 108, 108" of the relative grooves 104, 104", thus acting as rear seals; and
- also perform the function of expanding springs, exerting a uniform thrust along the perimeter of the respective sealing elements 110, 110", which may therefore be thinner and more flexible than the sealing elements 3 of the known type and may better copy the side wall 109 of associated cylinder 103.

Furthermore, the solution using grooves 104" and sealing elements 110" and pushing elements 111" with a double wave or saddle configuration also eliminates any residual reduced blow-bys eventually present through the notches 112, 125 of the sealing and pushing elements 110, 111.

The better seal obtainable in the solutions according to the invention may facilitate use of a lower number of sealing elements 110, 110', 110" and pushing elements 111, 111" on the pistons 100, 100" and make them lighter.

It should also be considered that the top of the pistons of alternating volumetric machines with head valves must often be raised, so that the common flat sealing elements 3 may pass above the piston pin, and that, in order to avoid interferences with the valves, it is often necessary to create recesses (see the recesses indicated with Z in figure 1); with the double-wave or saddle sealing elements 110" arranged as in figure 15, said top may, on the other hand, be bent downwards to give space to the valves, since the piston pin is passed over by the upper wave of said sealing elements 110"; in this manner, the piston may be shorter and lighter.

With shorter pistons, it is possible to lower the cylinder heads and thus reduce the overall dimensions and the weight of the entire machine; or it is possible to lengthen the connecting rods and reduce the ratio between the radius of the crank and the length of the connecting rod of the crank gear and thus the vibrations of the machine.

It is also clear from what is described and illustrated here that changes and variants may be made to the pistons 100, 100" without deviating from the area of protection as defined by the appended claims.

## Claims

1. A piston (100, 100") for a fluidic actuator (101), having an axis (A) and comprising:
- a body (102) adapted to axially slide in an associated hollow cylinder (103) and preferably manufactured in a single piece;
- at least one groove (104, 104") peripherally obtained on said body (102), extending around said axis (A) and delimited by two flanks (106, 107; 106", 107") transverse to said axis (A) and by a bottom surface (108, 108") connecting to one another the radially innermost edges of said flanks (106, 107; 106", 107");
- at least one sealing element (110, 110', 110") extending around said axis (A), housed in said groove (104, 104") and adapted to exert, in use, a fluidic sealing action against the wall (109) of said associated cylinder (103); and
- at least one pushing element (111, 111") extending around said axis (A), housed in said groove (104, 104") between said body (102) and said sealing element (110, 110', 110") and exerting an elastic radial pushing action upon the sealing element (110, 110', 110") itself towards the outside of said body (102);
wherein said pushing element (111, 111") extends in a radially interposed position between said bottom surface (108, 108") of said groove (104, 104") and said sealing element (110, 110', 110"); and wherein said sealing element (110, 110', 110") has, on the side facing the bottom surface (108, 108") of said groove (104, 104"), a recess (120, 120"), which defines a sliding seat for said pushing element (111, 111") and is delimited by two surface portions (116a, 116b; 116a", 116b") forming between each other an angle of more than 90° and less than 180°;
**characterized in that** said pushing element (111, 111") presses against both said groove (104, 104") and said sealing element (110, 110', 110") and realises the rear seal even when said sealing element (110, 110', 110") does not touch the flanks (106, 107; 106", 107") of said groove (104, 104")".

2. The piston according to claim 1, wherein said surface portions (116a, 116b; 116a", 116b") of said recess (120, 120") have geometrical dimensions such as to always cover said pushing element (111, 111") and to prevent disengagement from the recess (120, 120") itself.

3. The piston according to claim 1 or 2, wherein said surface portions (116a, 116b; 116a", 116b") of said recess (120, 120") intersect each other in an area (122) closest to one (114, 114'') of the opposite axial ends (114, 114"; 115, 115") of said sealing element (110, 110', 110").

4. The piston according to any of the preceding claims, wherein said bottom surface (108, 108") of said groove (104, 104") extends parallel to one (116b, 116b") of said surface portions (116a, 116b; 116a", 116b") of said recess (120, 120").

5. The piston according to any of the preceding claims, wherein said sealing element (110, 110') is flat and has an annular conformation with a transverse through notch (112), and wherein said pushing element (111) has a frusto-conical shape and also has a transverse through notch (125).

6. The piston according to claim 5, wherein the bottom surface (108) of said groove (104) has a frusto-conical conformation.

7. The piston according to claim 5 or 6, wherein said sealing element (110, 110') has a section of minimum radial thickness in correspondence with said intersection zone (122) of said surface portions (116a, 116b) of said recess (120).

8. The piston according to any of claims 1 to 4, wherein said sealing element (110"), said pushing element (111") and said groove (104") have double wave configurations, each double wave configuration having:
- two first portions (S-) diametrically opposite to each other with respect to said axis (A) and defining respective lower ridges (C-) placed in contact with a first axial plane (P-) orthogonal to the axis (A) itself;
- two second portions (S+) diametrically opposite to one another with respect to said axis (A), angularly spaced at 90° from said first portions (S-) about the axis (A) itself and defining respective upper ridges (C+) placed in contact with a second axial plane (P+) parallel to, and spaced by an amount other than zero from, said first axial plane (P-); and
- a swinging curvilinear pattern between said upper and lower ridges (C +, C-) in the portions (Sm) comprised between said first and second portions (S-, S+).

9. The piston according to claim 8, wherein said sealing member (110") and said pushing element (111") have continuous extensions around said axis (A).

## Patentansprüche

1. Ein Kolben (100, 100") für einen fluidischen Aktuator (101), der eine Achse (A) aufweist und Folgendes umfasst:
- einen Körper (102), der dazu angepasst ist, axial in einem hohlen Zylinder (103) zu gleiten und bevorzugt in einem einzelnen Stück hergestellt ist;
- mindestens eine Nut (104, 104"), die am Umfang des Körpers (102) vorgesehen ist, sich um die Achse (A) erstreckt und von zwei Flanken (106, 107; 106", 107") begrenzt ist, die quer zur Achse (A) verlaufen, und durch eine Bodenfläche (108, 108"), welche die radial innersten Kanten der Flanken (106, 107; 106", 107") miteinander verbindet;
- mindestens ein Dichtelement (110, 110', 110"), das sich um die Achse (A) erstreckt, in der Nut (104, 104") aufgenommen ist und dazu angepasst ist, bei Gebrauch einen fluidischen Abdichtvorgang gegen die Wand (109) des zugehörigen Zylinders (103) auszuüben; und
- mindestens ein Drückelement (111, 111 "), das sich um die Achse (A) erstreckt, das in der Nut (104, 104") zwischen dem Körper (102) und dem Dichtelement (110, 110', 110") untergebracht ist und eine elastische radial drückende Wirkung auf das Dichtelement (110, 110', 110") selbst zur Außenseite des Körpers (102) ausübt;
wobei das Drückelement (111, 111 ") sich in einer radial zwischengelagerten Position zwischen der Bodenfläche (108, 108") der Nut (104, 104") und dem Dichtelement (110, 110', 110") erstreckt; und wobei das Dichtelement (110, 110', 110") auf der Seite, die der Bodenfläche (108, 108") der Nut (104, 104") gegenüberliegt, eine Aussparung (120, 120") aufweist, die einen Gleitsitz für das Drückelement (111, 111') definiert und durch zwei Oberflächenabschnitte (116a, 116b; 116a", 116b") beschränkt ist, die zwischen sich einen Winkel von über 90° und unter 180° bilden;
**dadurch gekennzeichnet, dass** das Drückelement (111, 111') sowohl gegen die Nut (104, 104') als auch das Dichtelement (110, 110', 110") drückt und die hintere Abdichtung selbst dann realisiert, wenn das Dichtelement (110, 110', 110") die Flanken (106, 107; 106", 107") der Nut (104, 104") nicht berührt.

2. Kolben nach Anspruch 1, wobei die Oberflächenabschnitte (116a, 116b; 116a", 116b") der Aussparung (120, 120") geometrische Abmessungen derart aufweisen, dass sie stets das Drückelement (111, 111 ") abdecken und ein Ausrücken aus der Aussparung (120, 120") selbst verhindern.

3. Kolben nach Anspruch 1 oder 2, wobei die Oberflächenabschnitte (116a, 116b; 116a", 116b") der Aussparung (120, 120") einander in einem Bereich (122) schneiden, der am nächsten bei einem (114, 114") der gegenüberliegenden axialen Enden (114, 114"; 115, 115") des Dichtelements (110, 110', 110") liegt.

4. Kolben nach einem der vorhergehenden Ansprüche, wobei die Bodenfläche (108, 108') der Nut (104, 104") sich parallel zu einem (116b, 116b") der Oberflächenabschnitte (116a, 116; 116a", 116b") der Aussparung (120, 120") erstreckt.

5. Kolben nach einem der vorhergehenden Ansprüche, wobei das Dichtelement (110, 110') flach ist und eine ringförmige Übereinstimmung mit einer Querdurchgangskerbe (112) aufweist, und wobei das Drückelement (111) eine Kegelstumpfform aufweist und ebenfalls eine Querdurchgangskerbe (125) umfasst.

6. Kolben nach Anspruch 5, wobei die Bodenfläche (108) der Nut (104) einen kegelstumpfförmigen Aufbau aufweist.

7. Kolben nach Anspruch 5 oder 6, wobei das Dichtelement (110, 110') einen Abschnitt minimaler radialer Dicke passend zu der Schnittzone (122) der Oberflächenabschnitte (116a, 116b) der Aussparung (120) aufweist.

8. Kolben nach einem der Ansprüche 1 bis 4, wobei das Dichtelement (110"), das Drückelement (111 ") und die Nut (104") doppelwellige Aufbauten aufweisen, wobei jeder doppelwellige Aufbau Folgendes umfasst:
- zwei erste Abschnitte (S-), die einander über die Achse (A) diametral gegenüberliegen und jeweilige untere Kuppen (C-) definieren, die senkrecht zur Achse (A) selbst mit einer ersten axialen Ebene (P-) in Berührung platziert sind;
- zwei zweite Abschnitte (S+), die einander über die Achse (A) diametral gegenüberliegen, jeweils mit einem 90°-Winkel von den ersten Abschnitten beabstandet sind und jeweilige obere Kuppen (C+) definieren, die mit einer zweiten axialen Ebene (P+), die parallel zur ersten ersten axialen Ebene und mit einem Abstand größer Null von der ersten axialen Ebene (P-) beabstandet ist, in Berührung platziert sind; und
- einem kurvig schwingenden Muster zwischen den oberen und unteren Kuppen (C+, C-) in den Abschnitten, die zwischen den ersten und zweiten Abschnitten (S-, S+) liegen.

9. Kolben nach Anspruch 8, wobei das Dichtelement (110") und das Drückelement (111 ") umlaufende Verlängerungen um die Achse (A) aufweisen.

## Revendications

1. Piston (100, 100") pour un actionneur fluidique (101), ayant un axe (A) et comprenant :
- un corps (102) destiné à coulisser axialement dans un cylindre creux associé (103) et fabriqué de préférence en une seule pièce,
- au moins une gorge (104, 104") obtenue de manière périphérique sur ledit corps (102), s'étendant autour dudit axe (A) et délimitée par deux flancs (106, 107 ; 106", 107") transversaux par rapport audit axe (A) et par une surface inférieure (108, 108") se connectant à une autre des arêtes les plus vers l'intérieur radialement desdits flancs (106, 107 ; 106", 107"),
- au moins un élément d'étanchéité (110, 110', 110") s'étendant autour dudit axe (A), reçu dans ladite gorge (104, 104") et destiné à exercer, en utilisation, une action d'étanchéité fluidique contre la paroi (109) dudit cylindre associé (103), et
- au moins un élément de poussée (111, 111") s'étendant autour dudit axe (A), reçu dans ladite gorge (104, 104") entre ledit corps (102) et ledit élément d'étanchéité (110, 110', 110") et exerçant une action de poussée radiale élastique sur l'élément d'étanchéité (110, 110', 110") lui-même en direction de l'extérieur dudit corps (102),
dans lequel ledit élément de poussée (111, 111") s'étend dans une position interposée radialement entre ladite surface inférieure (108, 108") de ladite gorge (104, 104") et ledit élément d'étanchéité (110, 110', 110"), et dans lequel ledit élément d'étanchéité (110, 110', 110") a, sur le côté tourné vers la surface inférieure (108, 108") de ladite gorge (104, 104"), un renfoncement (120, 120"), qui définit un siège de coulissement pour ledit élément de poussée (111, 111") et est délimité par deux parties de surface (116a, 116b ; 116a", 116b") formant entre elles un angle de plus de 90° et inférieur à 180°,
**caractérisé en ce que** ledit élément de poussée (111, 111") appuie à la fois sur ladite gorge (104, 104") et sur ledit élément d'étanchéité (110, 110', 110") et réalise l'étanchéité arrière même lorsque ledit élément d'étanchéité (110, 110', 110") ne touche pas les flancs (106, 107 ; 106", 107") de ladite gorge (104, 104").

2. Piston selon la revendication 1, dans lequel lesdites parties de surface (116a, 116b ; 116a", 116b") dudit renfoncement (120, 120") ont des dimensions géométriques de manière à toujours couvrir ledit élément de poussée (111, 111") et à empêcher un désengagement par rapport au renfoncement (120, 120") lui-même.

3. Piston selon la revendication 1 ou 2, dans lequel lesdites parties de surface (116a, 116b ; 116a", 116b") dudit renfoncement (120, 120") ont une intersection l'une avec l'autre dans une zone (122) la plus proche de l'une (114, 114") des extrémités axiales opposées (114, 114" ; 115, 115") dudit élément d'étanchéité (110, 110', 110").

4. Piston selon l'une quelconque des revendications précédentes, dans lequel ladite surface inférieure (108, 108") de ladite gorge (104, 104") s'étend parallèlement à l'une (116b, 116b") desdites parties de surface (116a, 116b ; 116a", 116b") dudit renfoncement (120, 120").

5. Piston selon l'une quelconque des revendications précédentes, dans lequel ledit élément d'étanchéité (110, 110') est plat et a une conformation annulaire avec une encoche traversante transversale (112), et dans lequel ledit élément de poussée (111) a une forme tronconique et a également une encoche traversante transversale (125).

6. Piston selon la revendication 5, dans lequel la surface inférieure (108) de ladite gorge (104) a une conformation tronconique.

7. Piston selon la revendication 5 ou 6, dans lequel ledit élément d'étanchéité (110, 110', 110") a une section d'une épaisseur radiale minimale en correspondance avec ladite zone d'intersection (122) desdites parties de surface (116a, 116b) dudit renfoncement (120).

8. Piston selon l'une quelconque des revendications 1 à 4, dans lequel ledit élément d'étanchéité (110"), ledit élément de poussée (111") et ladite gorge (104") ont des configurations de vagues doubles, chaque configuration de vague double ayant :
- deux premières parties (S-) diamétralement opposées l'une par rapport à l'autre par rapport audit axe (A) et définissant des nervures inférieures respectives (C-) placées en contact avec un premier plan axial (P-) orthogonal à l'axe (A) lui-même,
- deux deuxièmes parties (S+) diamétralement opposées l'une par rapport à l'autre par rapport audit axe (A), écartées angulairement de 90° par rapport auxdites premières parties (S-) autour de l'axe (A) lui-même et définissant des nervures supérieures respectives (C+) placées en contact avec un deuxième plan axial (P+) parallèle audit premier plan axial (P-), et écarté d'une quantité différente de zéro par rapport à celui-ci, et
- un motif curviligne d'oscillation entre lesdites nervures supérieures et inférieures (C+, C-) dans les parties (Sm) comprises entre lesdites première et deuxième parties (S-, S+).

9. Piston selon la revendication 8, dans lequel ledit élément d'étanchéité (110") et ledit élément de poussée (111") ont des extensions continues autour dudit axe (A).
